# EUROPEAN PATENT SPECIFICATION

(11) **EP 2 674 650 B1**
(45) Date of publication and mention of the grant of the patent: **08.03.2017**
(21) Application number: 12189819.1
(22) Date of filing: 24.10.2012
(51) Int. Cl.: F16K 15/06, F16K 17/04, F16K 24/04

(54) **SAFETY VALVE**
SICHERHEITSVENTIL
SOUPAPE DE SÉCURITÉ

(30) Priority: 15.06.2012 IT VI20120143
(43) Date of publication of application: 18.12.2013
(73) Proprietor: Elettromaule Component S.r.l., 36100 Vicenza (IT)
(72) Inventor: De Peron, Marco, 36077 Vicenza (IT)
(74) Representative: Trentin, Michele

(56) References cited:
- EP-A1- 0 083 814
- EP-A2- 1 235 013
- NL-A- 7 700 888
- US-A- 3 217 082
- US-A- 4 796 777
- US-A1- 2002 092 567

## Description

### Field of application

The present invention generally relates to areas which use closed containers in which are present fluids that can increase the internal pressure.

More in detail, the present invention relates to a safety valve for containers of fluids and, particularly, for oil-filled electric transformers.

### Background of the invention

It is known the use of safety valves to detect overpressure situations in many applications where it is necessary to provide an outlet for under pressure fluids that are going beyond safety limits and that could cause a damage or the explosion of the system or the container in which they are contained. An example at this regard are the oil-filled electric transformers where the oil can cause the increasing of the internal pressure of the transformer with the risk of explosion.

Typically these valves are automatic devices having an inlet and an outlet, and whose purpose is to prevent that the implant, containing liquids or gases, can be subjected to a dangerous pressure. It is also known the use of said valves on boilers, cookers or pipe systems.

The inlet is connected to the system and subjected to the pressure therein. The outlet can, according to the type of plant, communicate with the atmosphere or connected to a recovery pipe or a safety pipe.

The known valves have, in their inner part of the inlet side, a nozzle having a predetermined length. Generally the nozzle is designed to have a section which gradually narrows, and reaches the minimum value in its internal end part. Above the end of the nozzle rests a stopper pushed by a spring with adjustable compression. The stopper surface that rests on the nozzle make a mechanical seal. For some applications the stopper surface is covered with soft material to ensure a perfect seal.

The fluid press, through the nozzle, the whole area of the stopper. The force thus generated is balanced by the force exerted by the spring on the stopper. When the pressure increases and the force exerted on the stopper exceeds that exerted by the spring, the stopper begins to rise. The fluid then starts to move and to exit radially over the entire surface of the stopper. Typically the latter has, along its entire periferal circumference, a protrusion facing downward. Therefore, the fluid is forced to change its trajectory going down at high speed. The effect is to generate an additional force on the stopper which causes the total opening of the valve.

When the pressure decrease below a predetermined value determined by the adjusted action of the spring, the reverse effect occurs and the valve closes completely in a very short time.

The above described safety valves guarantee their activation, ie the outward discharge of the fluid, as soon as the pressure exceeds a predetermined value set by adjusting the spring. However it can happen that the pressure value that the fluid tends to reach is slightly greater than said predetermined value. In this case the discharge of the fluid is a drawback and not a desired effect.

Moreover, the downward trajectory of the fluid can also cause the valve opening even for overpressure values lower then a desired threshold.

For these reasons are known safety valves which, in such cases, have an intermediate configuration where there is an additional vent chamber that does not communicate with the outside until it is exceeded a subsequent predetermined pressure value. In this sense, these valves have a first sealing gasket interposed between the surface of the stopper and the nozzle, and a second gasket interposed between the downward projection and the lateral surface of the nozzle. When the internal pressure exceeds the first predetermined value, the stopper raise-up and the fluid exit from the nozzle. However, the second gasket prevents the outwards discharge of the fluid by holding it in the vent chamber that is formed between the stopper and the lateral surface of the nozzle. With the increasing of the pressure the stopper increases the own rise-up movement from the nozzle. On reaching the second predetermined pressure value, the rising-up of the stopper with respect to the nozzle is such as to terminate the action of the second gasket allowing the outwards discharging of the fluid.

Although the valves described above allow to better manage the overpressure of the fluid in the plants, they have however certain recognized drawbacks.

A first drawback consists in the positioning and the fastening of the first gasket, ie the gasket that allow tightness between the stopper and a surface around the outlet of the nozzle. In fact, when the stopper is raised by the pressure, if the first gasket is not stably fastened to the stopper or to the outlet of the nozzle, it may move compromising the seal when the valve closes again returning to the rest position.

Some known safety valves have a groove around the outlet of the nozzle where is partially inserted the gasket. However, this solution does not guarantee that the gasket remains in that position when the stopper rise-up. Often, in fact, they are generated cohesions between the stopper and the gasket that cause the at least partial rising-up of the latter. There is the same problem if the groove is made around the stopper.

To avoid the rising-up of the gasket adhesives are generally used, but such a solution makes it difficult not only the assembly of the valve, but also the replacement of the gasket when damaged.

They are also known other valves that have a retaining ring that holds in place the gasket and which is held in place typically by means of one or more screws. It is evident that also in this case both the assembly as the maintenance of the safety valve are complex and therefore also expensive.

Patent NL 7 700 888 A is also known. It describes a valve in which a gasket is interposed between the upper surface of the nozzle and the base of the stopper. The valve action is totally obtained by the action of a coil that pushes the stopper against the upper surface of the nozzle. The adjustment of the valve action is obtained by the adjustment of the coil compression and, as it is known, it is not an accurate adjustment because of the known limitation of the coil.

### Summary of the invention

Object of the present invention is to at least partially overcome the drawbacks listed above, by providing a safety valve that is more easily assembled than the equivalent known safety valves.

Another object is to provide a safety valve which has lower maintenance costs
in respect of the known equivalent safety valves.

A further object of the invention is that the valve can have a configuration where there is an additional vent chamber with the guarantee that all the sealing means which are present always rest in position at any operating instant of the valve so guaranteeing, when the valve come backs to the idle state, the sealing.

These objects, and others which will appear more clearly below, are fulfilled by a safety valve in accordance with the claims that follow which are an integral part of this description.

In particular, the safety valve comprises at least one nozzle having at least
one inlet opening and at least one outlet opening for fluids. Typically this nozzle can be applied on a through-hole present in a wall of a container of fluids under pressure.

The inlet opening may allow the under pressure fluid to go from inside the container towards the outlet opening.

In this sense, the same valve comprises at least one stopper arranged to
close the outlet opening and may also have at least one annular portion designed to envelope at least one portion of the side walls of the nozzle around the outlet opening. In this sense, the stopper may not only occlude the outlet opening of the nozzle, but also embrace a neighboring portion of the same.

According to an aspect of the invention, the safety valve comprises at least
one elastic element acting at least on the stopper to counteract its rise-up from the nozzle as a result of an increase of the internal pressure of container. The possible adjustment of the elastic element may allow to adjust the amount of pressure to which the valve may be activated.

The same valve also comprises sealing means to guarantee the tightness
between the stopper and the nozzle. In particular, the sealing means comprise at least one first gasket and at least one second gasket interposed between the aforesaid portion of the side walls of the nozzle and the annular portion of the stopper to locate a first sealing areas proximal to the outlet opening and a second sealing area distal to the outlet opening.

In this way, advantageously, the removal due to over-pressure of the stopper from the nozzle could produces three operating configurations which can happen with the progressive rising up of the stopper:
- at least one first configuration in which both the sealing areas could be working, the gaskets being in contact with both the portion of the side walls of the nozzle and the annular portion of the stopper;
- at least one second configuration in which only the second sealing area could be working, only the second gasket being in contact with both the portion of the side walls of the nozzle and the annular portion of the stopper;
- at least one third configuration in which none of the sealing areas is working, the stopper, the gaskets and the nozzle allowing the hydraulic continuity between the outlet of the nozzle and the outside.

In other words, the valve of the invention, following an overpressure event, may have a first operation instant in which the first sealing area ceases to act and an additional vent chamber is formed between the stopper and the nozzle. This chamber is in communication with the interior of the container to which is applied the valve, but the fluid that may accumulate in it cannot go to the outside due to the active state of the second sealing area. In this situation, the internal pressure tends to lower although there is not an outwards fluid discharge. However, a further increase in pressure will cause a further rising up of the stopper from the nozzle until the end of the action of the second sealing area. In this situation, there be hydraulic continuity between the inlet opening of the valve and the outside, ie between the interior of the container and the outwards.

This will allow to properly manage overpressure events near to the first threshold value of the internal pressure of a container without necessarily having the discharge of fluid to the outside. At the same time, the configuration and the arrangement of gaskets can guarantee the stability of their positioning in such a way the comeback of the valve in the rest position totally restore the watertight of both areas.

The execution costs of such a valve may be advantageously lower than in the prior art as they are not used, for the purpose aforesaid, neither adhesives nor block screwed elements or similar to fix one or more gaskets.

Also the servicing is easier and less expensive compared to the equivalent known valves.

It is also evident that the objects of the invention are also achieved by an oil-filled electric transformer having a container in which be present at least one through hole in which can be inserted the cited safety valve of the invention.

### Brief description of the drawings

Further features and advantages of the invention will appear more evident upon reading the detailed description of some preferred, non-exclusive embodiments of a safety valve according to the invention, which are described as non-limiting examples with the help of the annexed drawings, in which:
FIG. 1 represents a safety valve according to the invention in axonometric view;
FIG. 2 represents the safety valve of FIG. 1 in a sectioned view;
FIG. 3 represents the safety valve of FIG. 1 in an exploded view;

### Detailed description of some preferred embodiments of the invention

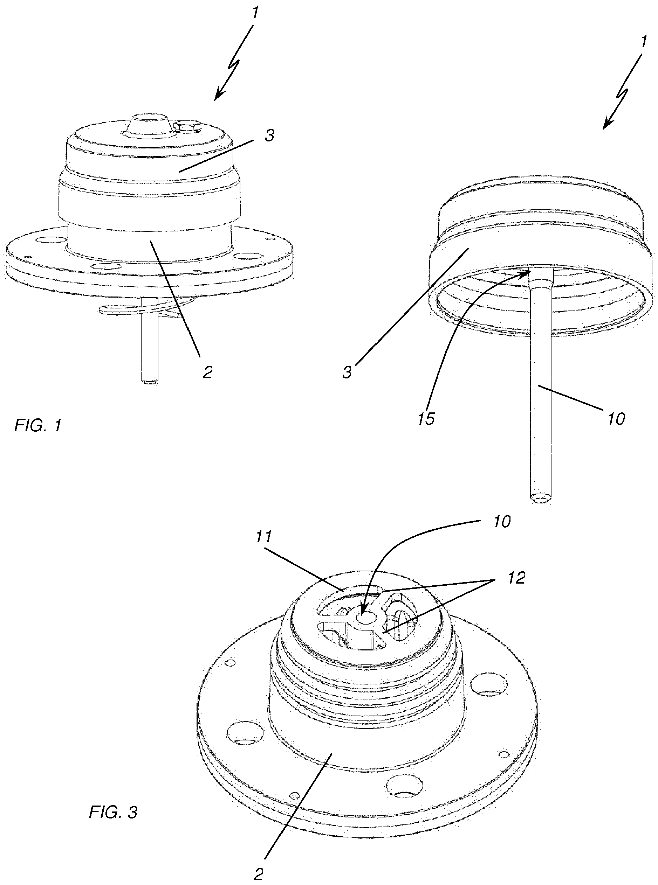

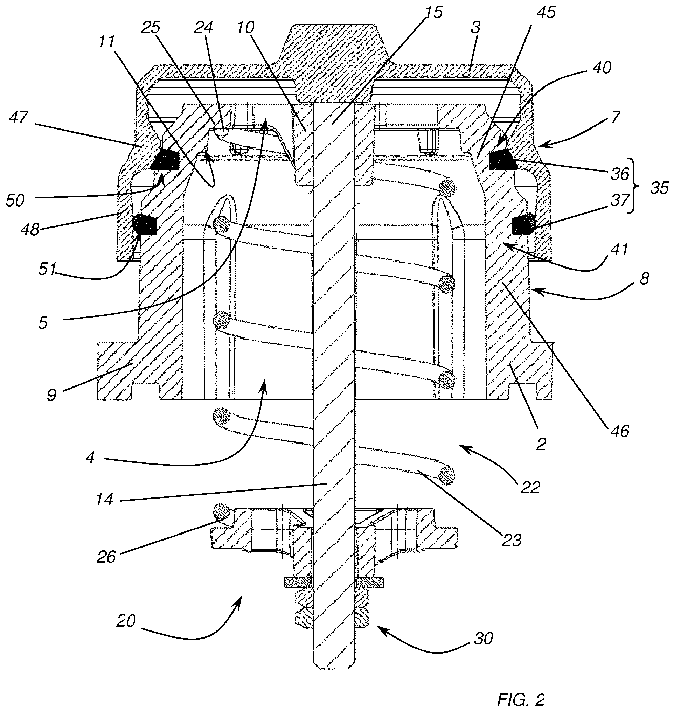

Referring to the above figures, and particularly to FIGS. 1 and 2, it is described a safety valve 1 having a nozzle 2 and a stopper 3.

In particular, the nozzle 2 has an inlet 4 and an outlet 5. Said inlet 4 and outlet 5 allow the transition of fluids from one end to the other of the nozzle 2. In this sense, when the valve 1 is applied to a closed container, the nozzle 2 with said inlet 4 and outlet 5 allow the transit of the fluids contained inside the container.

With reference to the stopper 3, it is placed to close the outlet 5 and has an annular portion 7 arranged enveloping at least one portion 8 of the side walls 9 of the nozzle 2 near the outlet 5. In other words, the stopper 2 is designed so as to close as a cover the outlet 5 of the nozzle 2 by wrapping its end portion.

In the figures it is possible to observe that both the nozzle 2 and the stopper 3 are circular shaped. This of course must not be considered limitative for different embodiments in which the section presents different shape such as a polygon.

According to one aspect of the invention, the safety valve 1 comprises, as shown in Fig. 3, a bushing 10 arranged inside the nozzle 2 and connected with its internal walls 11 by means of spokes 12. Also in this case the position of the bushing 10 and the number of spokes 12 are not limiting characteristics for the present invention.

At the same time the valve 1 also includes a centering leg 14 a first end 15 of which is stably coupled to the stopper 3 and that slidably cross the bushing 10. In this way, the stopper 3 can approach and move away from the nozzle 2 by the scrolling in one direction or in the opposite of the centering leg 14 in the bushing 10.

However, while the approach movement is limited by the contact between the stopper 3 and the nozzle 2 (closing of the valve 1), the rising up movement may be not limited and does lead to the detachment of the two elements. Suitably, the valve 1 also comprises a stopping element 20 stably coupled to the centering leg 14 for limiting the rising up sliding. The same stopping element 20, as will be seen below, is also used to allow the calibration of the valve 1.

With said described configuration, the valve 1 of the invention would open leaving the transit of the fluid to the outside with pressure values higher the weight of the stopper 3, that is for lower pressure values. To increase the tightness of the valve 1 is then present an elastic element 22 which acts on the stopper 3 for counteracting its rising up from the nozzle 2. In this way, the pressure value that brings the stopper 3 to rising up from the nozzle 2 is directly dependent on the elasticity degree of the elastic element 22.

The latter is typically, but not necessarily, constituted by a spring 23 a first end 24 of which abuts against the inner edge 25 of the outlet 5 of the nozzle 2. The second end 26 abuts against the stopping element 20. The rising up movement of the stopper 3 from the nozzle 2 is therefore hindered by the elastic reaction of the spring 23 subjected to a compression. This compression is also responsible for the comeback to the rest position of the valve 1 when the pressure of fluids back less than the value that has caused its opening.

According to one aspect of the invention, in order to allow the calibration of the pressure value after which the stopper 3 begins to rise up from the nozzle 2, ie with which it is won the elastic reaction of the spring 23 which begins to compress, the safety valve 1 of the invention comprises an adjustment assembly 30 of the stopping element 20 on the centering leg 14. In particular, by moving the stopping element 20 is possible to fix a predetermined precompression of the spring 23 so varying the pressure value required to start the movement of rising up of the stopper 3 from the nozzle 2.

According to the described embodiment, the stopping element 20 comprises an annular plate provided with a through hole crossed from the centering leg 14. The adjustment assembly 30, instead, comprises a thread realized on a section of the centering leg 14 and a nut screwed onto this thread. However, this is only an example of embodiment of the invention and it is not limitative for different embodiments.

Since the simple contact between the stopper 3 and the nozzle 2 may not be sufficient to guarantee the closure of the safety valve 1, according to another aspect of the invention the latter also comprises sealing means 35 to guarantee the tightness between the stopper 3 and the nozzle 2.

In particular, these sealing means 35 comprise a first gasket 36 and a second gasket 37 interposed between the portion 8 of the side walls 9 of the nozzle 2 and the annular portion 7 of the stopper 3 and spaced apart by a predefined distance. The contact between these portions 7 and 8 and the gaskets 36 and 37 allows to realize respectively a first sealing area 40 proximal to the outlet 5 and a second distal sealing area 41. In the rest position there are therefore two areas which guarantee the watertight of the valve 1 of the invention and it is observed that they are advantageously placed laterally to the nozzle 2. In other words, the rising up of the stopper 3 from the nozzle 2 cannot cause, as is the case in the known valves, displacements of the gaskets 36 and 37 so as to cause the impossibility for the valve 1 to come back to the rest position. All that is achieved without the use of adhesives or fixing elements as happens in the known valves. It is evident, therefore, that the execution of the valve 1 of the invention is simpler and less expensive. In particular, it is sufficient to realize, as we shall see shortly, some grooves on the stopper 3 or on the nozzle 2 which house at least one portion of the gaskets 36, 37 to keeping it in position.

According to a further aspect of the invention, the valve 1 is shaped in such a way that the progressive rising up movement of the stopper 3 from the nozzle 2 due to excess of internal pressure leads the valve 1 to take on three distinct configurations. In a first configuration, also said rest configuration, both sealing areas are operative. In this configuration, the gaskets 36, 37 are both in contact simultaneously with the portion 8 of the side walls 9 of the nozzle 2 and with the annular portion 7 of the stopper 3.

In a second configuration, which constitutes a first operating configuration, the internal overpressure causes an initial rising up movement of the stopper 3 from the nozzle 2. This leads to detachment of the first gasket 36 from the portion 8 of the side walls 9 of the nozzle 2 or from the annular portion 7 of the stopper 3. In other words, it ceases the sealing of the first area 40. However, the second sealing area 41 remains operative. In this case, therefore, the fluid can exit the outlet 5 and access the interspace, or additional chamber, which is created between the nozzle 2 and the stopper 3. From here, however, the fluid cannot exit towards the outside because the active presence of the second sealing area 41.

Advantageously, the size of the additional chamber is determinable by the
predefined distance between the first gasket 36 and the second gasket 37.

In the embodiment that has being described this is obtained thanks to the shaping of the nozzle 2 and the stopper 3. In particular, the portion 8 of the side wall 9 of the nozzle 2 has a first portion 45, proximal to the outlet 5, with a decreased width with respect to a second distal portion 46.

Similarly, the annular portion 7 of the stopper 3 has a third portion 47 proximal to the contact surface between the stopper 3 and the outlet 5 of the nozzle 2, this third portion 47 being with a decreased width with respect to a fourth distal portion 48.

With the above shapings of the stopper 3 and of the nozzle 2 is evident that the first gasket 36 is arranged in correspondence of the first portion 45 and third portion 47, while the second gasket 37 is placed in correspondence to the second portion 46 and the fourth portion 48 when the valve 1 is in the rest configuration.

To increase the stability of the positioning of the first gasket 36 on the side wall, the portion 8 of the side wall 9 of the nozzle 2 has a first groove 50 and a second groove 51 which partially accommodate respectively the first gasket 36 and the second gasket 37. In particular, the first groove 50 is realized in the first portion 45 of the side wall 9 of the nozzle 2, while the second groove 51 is realized in the second portion 46.

This embodiment should not be considered limitative of different embodiments where, for example, the grooves are made in the annular portion of the stopper.

Advantageously there is therefore a first operating configuration in which the fluid that exceeds a first predetermined pressure level can have an outlet in an additional room that is dynamically created in the valve 1 without exit to the outside. They are avoided, therefore, fluid leakage to the outside for pressure values next the threshold.

Still advantageously, while in the known art the instant of transition from the rest configuration to the first operating configuration is entirely left to the adjustment of the elastic element 22, in the safety valve 1 of the invention the lateral positioning of the first gasket 36 also adds another regulating factor of such an instant of transition simply predetermining the placement point of this first gasket 36. In fact, the first sealing area 40 remains active in the presence of relative movements between the nozzle 2 and the stopper 3 being sufficient spacing the first gasket 36 from the outlet 5.

The lateral positioning to the nozzle 2 of the first gasket 36 also helps to guarantee that the first sealing area 40 will be perfectly restored when the fluid pressure falls below the aforementioned predetermined value. All that without the first gasket 36 must be held in place by means of adhesives, screw fastening means or another. The execution phase and the servicing phase of the valve 1 are consequently simplified and less expensive compared to the known valves.

If the pressure continues to increase, the stopper 3 continues to rise up from the nozzle 2. In correspondence with a second predetermined value of overpressure the rising up causes the detachment of the second gasket 37 from the portion 8 of the side walls 9 of the nozzle 2 or from the annular portion 7 of the stopper 3. In other words ceases the seal even in the second area 41. This fact therefore leads to a third configuration of the valve 1, which corresponds to a second operating configuration, in which it is allowed fluid to go outside.

Even in this case the gaskets 36 and 37 are fixed in their position and guarantee the recovery in succession of the second sealing area 41 and the first sealing area 40 due to the progressive decrease of the internal pressure.

As previously mentioned, a particularly advantageous application of the safety valve 1 of the invention is in an oil-filled electric transformer. In this case, the container of the transformer as a through hole in which is stably placed the valve 1
for securing the transformer in case of overpressure of the oil contained in it. We herein not accurately describe this embodiment because such execution is analogous to what has been described before.

In the light of the foregoing, it is understood that the safety valve of the invention, as the oil filled electric transformer that comprises it, overcomes the drawbacks of the known prior art reaching the proposed object. In particular, they are at least partially overcome the drawbacks of the known prior art being more easily assembled than the equivalent known safety valves.

The safety valve of the invention has lower production and servicing costs in
respect of the known equivalent safety valves even guaranteeing a perfect working assuming a configuration where there is a vent chamber with the certainty that all sealing means that are in it rest always in the original position at any operating instant guaranteeing, when the valve returns to the rest configuration, the watertight.

The safety valve of the invention is susceptible of a number of changes and variants, within the inventive concept disclosed in the appended claims. All the details thereof may be replaced by other technically equivalent parts, and the materials may vary depending on different needs, without departing from the scope of the invention, as defined by the claims.

While the safety valve of the invention has been described with particular reference to the accompanying figures, the numerals referred to in the disclosure and claims are only used for the sake of a better intelligibility of the invention and shall not be intended to limit the claimed scope in any manner.

## Claims

1. A safety valve comprising:
- at least one nozzle **(2)** provided with at least one inlet **(4)** and at least one outlet **(5)** for fluids;
- at least one stopper **(3)** to close said outlet **(5)** of said nozzle **(2),** said stopper **(3)** having at least one annular portion **(7)** arranged enveloping at least one portion **(8)** of the side walls **(9)** of said nozzle **(2)** near said outlet **(5);**
- at least one elastic element **(22)** acting on at least said stopper **(3)** to counteract its rising up from said nozzle **(2);**
- sealing means **(35)** to seal said stopper **(3)** with said nozzle **(2),**
**characterized in that** said sealing means **(35)** comprise at least one first gasket **(36)** and at least one second gasket **(37)** spaced by a predefined distance and interposed between said portion **(8)** of said side walls **(9)** of said nozzle **(2)** and said annular portion **(7)** of said stopper **(3)** to identify a first sealing area **(40)** proximal to said outlet **(5)** and a second sealing area **(41)** distal, the rising up due to over-pressure of said stopper **(3)** from said nozzle **(2)** defining at least three operating configurations:
- at least one first configuration in which both said sealing areas **(40, 41)** are working, said gaskets **(36, 37)** being in contact with both said portion **(8)** of said side walls **(9)** of said nozzle **(2)** and said annular portion (7) of said stopper **(3);**
- at least one second configuration in which only said second sealing area **(41)** is working, only said second gasket **(37)** being in contact with both said portion **(8)** of said side walls **(9)** of said nozzle **(2)** and said annular portion **(7)** of said stopper **(3);**
- at least a third configuration in which none of said sealing areas **(40, 41)** is working, said cover **(3),** said gaskets **(36, 37)** and said nozzle **(2)** allowing the hydraulic continuity between said outlet **(5)** of said nozzle **(2)** and the outside,
the positioning of said first gasket **(36)** allowing to fix the transition instant, during the movement between said nozzle **(2)** and said annular portion **(7)** of said stopper **(3),** of said valve **(1)** from said first configuration to said second configuration.

2. Safety valve according to claim 1, **characterized in that** said portion **(8)** of said side walls **(9)** of said nozzle **(2)** has a first portion **(45),** proximal to said outlet **(5),** with a decreased width with respect to a second distal portion **(46),** said first gasket **(36)** being next to said first portion **(45)** and said second gasket **(37)** being next to said second portion **(46).**

3. Safety valve according to claim 1 or 2, **characterized in that** said annular portion **(7)** of said stopper **(3)** has a third portion **(47)** proximal to the contact surface between said stopper **(3)** and said outlet **(5)** of said nozzle **(2),** said third portion **(47)** being with a decreased width with respect to a fourth distal portion **(48).**

4. Safety valve according to any one of the preceding claims, **characterized in that** said portion **(8)** of the side wall **(9)** of said nozzle **(2)** has at least one first **(50)** and at least one second groove **(51)** which at least partially accommodate respectively said first **(36)** and said second gasket **(37).**

5. Safety valve according to any of the claims from 1 to 3, **characterized in that** said annular portion of said stopper has at least one third and at least one fourth groove which at least partially accommodate respectively said first and said second gasket.

6. Safety valve according to any of the preceding claims, **characterized in** comprising:
- at least one bushing **(10)** arranged inside said nozzle **(2)** and connected to the inner walls **(11)** of said nozzle **(2)** by one or more spokes **(12);**
- at least one centering leg **(14)** a first end **(15)** of which being stably connected with said stopper **(3)** and which slidably cross said bushing **(10);**
- at least one stopping element **(20)** stably coupled to said centering leg **(14)** to limit the sliding of the same in said bushing **(10).**

7. Safety valve according to claim 7, **characterized in that** said elastic element **(22)** comprises a spring **(23)** a first end **(24)** of which abuts against the inner edge **(25)** of said outlet **(5)** and whose second end **(26)** abuts against said stopping element **(20).**

8. Safety valve according to claim 7 or 8, **characterized in** comprising an adjustment assembly **(30)** of the position of said stopping element **(20)** on said centering leg **(14).**

9. An oil-filled electric transformer having a container having at least one opening in which is inserted a safety valve **(1),** the latter being provided with:
- at least one nozzle **(2)** provided with at least one inlet **(4)** of fluids, hydraulically in communication with the interior of said container, and at least one outlet **(5);**
- at least one stopper **(3)** to close said outlet **(5)** of said nozzle **(2),** said stopper **(3)** having at least one annular portion **(7)** arranged enveloping at least one portion **(8)** of the side walls **(9)** of said nozzle **(2)** near said outlet **(5);**
- at least one elastic element **(22)** acting on at least said stopper **(3)** to counteract its rising up from said nozzle **(2);**
- sealing means **(35)** to seal said stopper **(3)** with said nozzle **(2),**
**characterized in that** said sealing means **(35)** comprise at least one first gasket **(36)** and at least one second gasket **(37)** spaced by a predefined distance and interposed between said portion **(8)** of said side walls **(9)** of said nozzle **(2)** and said annular portion **(7)** of said stopper **(3)** to identify a first sealing area **(40)** proximal to said outlet **(5)** and a second sealing area **(41)** distal, the rising up due to over-pressure of said stopper **(3)** from said nozzle **(2)** defining at least three operating configurations:
- at least one first configuration in which both said sealing areas **(40, 41)** are working, said gaskets **(36, 37)** being in contact with both said portion **(8)** of said side walls **(9)** of said nozzle **(2)** and said annular portion **(7)** of said stopper **(3);**
- at least one second configuration in which only said second sealing area **(41)** is working, only said second gasket **(37)** being in contact with both said portion **(8)** of said side walls **(9)** of said nozzle **(2)** and said annular portion **(7)** of said stopper **(3);**
- at least a third configuration in which none of said sealing areas **(40, 41)** is working, said cover **(3),** said gaskets **(36, 37)** and said nozzle **(2)** allowing the hydraulic continuity between said outlet **(5)** of said nozzle **(2)** and the outside,
the positioning of said first gasket **(36)** allowing to fix the transition instant, during the movement between said nozzle **(2)** and said annular portion **(7)** of said stopper **(3),** of said valve **(1)** from said first configuration to said second configuration.

## Patentansprüche

1. Sicherheitsventil, das Folgendes umfasst:
- mindestens eine Düse (2), die mit mindestens einem Einlass (4) und mindestens einem Auslass (5) für Fluide versehen ist;
- mindestens einen Stopper (3) zum Schließen des Auslasses (5) der Düse (2), wobei der Stopper (3) mindestens einen ringförmigen Abschnitt (7) aufweist, der so angeordnet ist, dass er mindestens einen Abschnitt (8) der Seitenwände (9) der Düse (2) nahe dem Auslass (5) umfängt;
- mindestens ein elastisches Element (22), das auf mindestens den Stopper (3) wirkt, um seinem Aufsteigen von der Düse (2) entgegenzuwirken;
- ein Dichtungsmittel (35) zum Abdichten des Stoppers (3) mit der Düse (2),
**dadurch gekennzeichnet, dass** das Dichtungsmittel (35) mindestens eine erste Dichtung (36) und mindestens eine zweite Dichtung (37) umfasst, die um eine vorgegebene Distanz beabstandet ist und zwischen dem Abschnitt (8) der Seitenwände (9) der Düse (2) und dem ringförmigen Abschnitt (7) des Stoppers (3) angeordnet ist, um eine erste Dichtungsfläche (40) nahe dem Auslass (5) und eine zweite Dichtungsfläche (41) distal zu markieren, wobei das Aufsteigen aufgrund eines Überdrucks des Stoppers (3) von der Düse (2) mindestens drei Betriebskonfigurationen definiert:
- mindestens eine erste Konfiguration, in der die beiden Dichtungsflächen (40, 41) arbeiten, wobei die Dichtungen (36, 37) in Kontakt sowohl mit dem Abschnitt (8) der Seitenwände (9) der Düse (2) als auch mit dem ringförmigen Abschnitt (7) des Stoppers (3) stehen;
- mindestens eine zweite Konfiguration, in der nur die zweite Dichtungsfläche (41) arbeitet, wobei nur die zweite Dichtung (37) in Kontakt sowohl mit dem Abschnitt (8) der Seitenwände (9) der Düse (2) als auch mit dem ringförmigen Abschnitt (7) des Stoppers (3) steht;
- mindestens eine dritte Konfiguration, in der keine der Dichtungsflächen (40, 41) arbeitet, wobei die Abdeckung (3), die Dichtungen (36, 37) und die Düse (2) die hydraulische Kontinuität zwischen dem Auslass (5) der Düse (2) und der Außenumgebung erlauben,
wobei die Positionierung der ersten Dichtung (36) es erlaubt, den Übergangsmoment - während der Bewegung zwischen der Düse (2) und dem ringförmigen Abschnitt (7) des Stoppers (3) - des Ventils (1) von der ersten Konfiguration zu der zweiten Konfiguration zu fixieren.

2. Sicherheitsventil nach Anspruch 1, **dadurch gekennzeichnet, dass** der Abschnitt (8) der Seitenwände (9) der Düse (2) einen ersten Abschnitt (45), nahe dem Auslass (5), mit einer verringerten Breite mit Bezug auf einen zweiten distalen Abschnitt (46) hat, wobei die erste Dichtung (36) neben dem ersten Abschnitt (45) angeordnet ist und die zweite Dichtung (37) neben dem zweiten Abschnitt (46) angeordnet ist.

3. Sicherheitsventil nach Anspruch 1 oder 2, **dadurch gekennzeichnet, dass** der ringförmige Abschnitt (7) des Stoppers (3) einen dritten Abschnitt (47) nahe der Kontaktfläche zwischen dem Stopper (3) und dem Auslass (5) der Düse (2) hat, wobei der dritte Abschnitt (47) eine verringerte Breite mit Bezug auf einen vierten distalen Abschnitt (48) hat.

4. Sicherheitsventil nach einem der vorangehenden Ansprüche, **dadurch gekennzeichnet, dass** der Abschnitt (8) der Seitenwand (9) der Düse (2) mindestens eine erste (50) und mindestens eine zweite Nut (51) hat, die mindestens teilweise die erste (36) bzw. die zweite Dichtung (37) aufnehmen.

5. Sicherheitsventil nach einem der Ansprüche 1 bis 3, **dadurch gekennzeichnet, dass** der ringförmige Abschnitt des Stoppers mindestens eine dritte und mindestens eine vierte Nut hat, die mindestens teilweise die erste bzw. die zweite Dichtung aufnehmen.

6. Sicherheitsventil nach einem der vorangehenden Ansprüche, **dadurch gekennzeichnet, dass** es Folgendes umfasst:
- mindestens eine Buchse (10), die im Inneren der Düse (2) angeordnet ist und mit den Innenwänden (11) der Düse (2) durch eine oder mehrere Speichen (12) verbunden ist;
- mindestens einen Zentrierschenkel (14), von dem ein erstes Ende (15) stabil mit dem Stopper (3) verbunden mit und das gleitend die Buchse (10) quert;
- mindestens ein Stoppelement (20), das stabil mit dem Zentrierschenkel (14) gekoppelt ist, um dessen Gleiten in der Buchse (10) zu begrenzen.

7. Sicherheitsventil nach Anspruch 7, **dadurch gekennzeichnet, dass** das elastische Element (22) eine Feder (23) umfasst, von der ein erstes Ende (24) am inneren Rand (25) des Auslasses (5) anliegt und deren zweites Ende (26) an dem Stoppelement (20) anliegt.

8. Sicherheitsventil nach Anspruch 7 oder 8, **dadurch gekennzeichnet, dass** es eine Justierbaugruppe (30) für die Position des Stoppelements (20) an dem Zentrierschenkel (14) umfasst.

9. Ölgefüllter elektrischer Transformator, der einen Behälter aufweist, der mindestens eine Öffnung aufweist, in die ein Sicherheitsventil (1) eingesetzt ist, wobei letzteres Folgendes aufweist:
- mindestens eine Düse (2), die mit mindestens einem Einlass (4) für Fluide, der in Strömungsverbindung mit dem Inneren des Behälters steht, und mindestens einem Auslass (5) versehen ist;
- mindestens einen Stopper (3) zum Schließen des Auslasses (5) der Düse (2), wobei der Stopper (3) mindestens einen ringförmigen Abschnitt (7) aufweist, der so angeordnet ist, dass er mindestens einen Abschnitt (8) der Seitenwände (9) der Düse (2) nahe dem Auslass (5) umfängt;
- mindestens ein elastisches Element (22), das auf mindestens den Stopper (3) wirkt, um seinem Aufsteigen von der Düse (2) entgegenzuwirken;
- ein Dichtungsmittel (35) zum Abdichten des Stoppers (3) mit der Düse (2),
**dadurch gekennzeichnet, dass** das Dichtungsmittel (35) mindestens eine erste Dichtung (36) und mindestens eine zweite Dichtung (37) umfasst, die um eine vorgegebene Distanz beabstandet ist und zwischen dem Abschnitt (8) der Seitenwände (9) der Düse (2) und dem ringförmigen Abschnitt (7) des Stoppers (3) angeordnet ist, um eine erste Dichtungsfläche (40) nahe dem Auslass (5) und eine zweite Dichtungsfläche (41) distal zu markieren, wobei das Aufsteigen aufgrund eines Überdrucks des Stoppers (3) von der Düse (2) mindestens drei Betriebskonfigurationen definiert:
- mindestens eine erste Konfiguration, in der die beiden Dichtungsflächen (40, 41) arbeiten, wobei die Dichtungen (36, 37) in Kontakt sowohl mit dem Abschnitt (8) der Seitenwände (9) der Düse (2) als auch mit dem ringförmigen Abschnitt (7) des Stoppers (3) stehen;
- mindestens eine zweite Konfiguration, in der nur die zweite Dichtungsfläche (41) arbeitet, wobei nur die zweite Dichtung (37) in Kontakt sowohl mit dem Abschnitt (8) der Seitenwände (9) der Düse (2) als auch mit dem ringförmigen Abschnitt (7) des Stoppers (3) steht;
- mindestens eine dritte Konfiguration, in der keine der Dichtungsflächen (40, 41) arbeitet, wobei die Abdeckung (3), die Dichtungen (36, 37) und die Düse (2) die hydraulische Kontinuität zwischen dem Auslass (5) der Düse (2) und der Außenumgebung erlauben,
wobei die Positionierung der ersten Dichtung (36) es erlaubt, den Übergangsmoment - während der Bewegung zwischen der Düse (2) und dem ringförmigen Abschnitt (7) des Stoppers (3) - des Ventils (1) von der ersten Konfiguration zu der zweiten Konfiguration zu fixieren.

## Revendications

1. Soupape de sécurité comprenant :
- au moins une buse (2) munie d'au moins une entrée (4) et d'au moins une sortie (5) pour des fluides ;
- au moins un bouchon (3) pour fermer ladite sortie (5) de ladite buse (2), ledit bouchon (3) comprenant au moins une partie annulaire (7) agencée pour envelopper au moins une partie (8) des parois latérales (9) de ladite buse (2) à proximité de ladite sortie (5) ;
- au moins un élément élastique (22) agissant au moins sur ledit bouchon (3) pour contrer son soulèvement de ladite buse (2) ;
- des moyens d'étanchéité (35) pour étanchéifier ledit bouchon (3) avec ladite buse (2),
**caractérisée en ce que** lesdits moyens d'étanchéité (35) comprennent au moins un premier joint (36) et au moins un deuxième joint (37) espacés d'une distance prédéterminée et interposés entre ladite partie (8) desdites parois latérales (9) de ladite buse (2) et ladite partie annulaire (7) dudit bouchon (3) pour identifier une première zone d'étanchéité (40) proximale de ladite sortie (5) et une deuxième zone d'étanchéité (41) distale, le soulèvement dû à une surpression dudit bouchon (3) de ladite buse (2) définissant au moins trois configurations de fonctionnement :
- au moins une première configuration dans laquelle lesdites deux zones d'étanchéités (40, 41) fonctionnent, lesdits joints (36, 37) étant en contact à la fois avec ladite partie (8) desdites parois latérales (9) de ladite buse (2) et ladite partie annulaire (7) dudit bouchon (3) ;
- au moins une deuxième configuration dans laquelle seule ladite deuxième zone d'étanchéité (41) fonctionne, seul ledit deuxième joint (37) étant en contact à la fois avec ladite partie (8) desdites parois latérales (9) de ladite buse (2) et ladite partie annulaire (7) dudit bouchon (3);
- au moins une troisième configuration dans laquelle aucune desdites zones d'étanchéité (40, 41) ne fonctionne, ledit bouchon (3), lesdits joints (36, 37) et ladite buse (2) permettant la continuité hydraulique entre ladite sortie (5) de ladite buse (2) et l'extérieur,
le positionnement dudit premier joint (36) permettant de fixer l'instant de la transition, pendant le déplacement entre ladite buse (2) et ladite partie annulaire (7) dudit bouchon (3), de ladite soupape (1) de ladite première configuration à ladite deuxième configuration.

2. Soupape de sécurité selon la revendication 1, **caractérisée en ce que** ladite partie (8) desdites parois latérales (9) de ladite buse (2) comporte une première partie (45), proximale de ladite sortie (5), avec une largueur réduite par rapport à une deuxième partie distale (46), ledit premier joint (36) étant à côté de ladite première partie (45) et ledit deuxième joint (37) étant à côté de ladite deuxième partie (46).

3. Soupape de sécurité selon la revendication 1 ou 2, **caractérisée en ce que** ladite partie annulaire (7) dudit bouchon (3) comporte une troisième partie (47) proximale de la surface de contact entre ledit bouchon (3) et ladite sortie (5) de ladite buse (2), ladite troisième partie (47) ayant une largeur réduite par rapport à une quatrième partie distale (48).

4. Soupape de sécurité selon l'une quelconque des revendications précédentes, **caractérisée en ce que** ladite partie (8) de la paroi latérale (9) de ladite buse (2) comporte au moins une première (50) et au moins une deuxième rainure (51) qui reçoivent au moins partiellement respectivement ledit premier (36) et ledit deuxième joint (37).

5. Soupape de sécurité selon l'une quelconque des revendications 1 à 3, **caractérisée en ce que** ladite partie annulaire dudit bouchon comporte au moins une troisième et au moins une quatrième rainure qui reçoivent au moins partiellement respectivement ledit premier and ledit deuxième joint.

6. Soupape de sécurité selon l'une quelconque des revendications précédentes, **caractérisée en ce qu**'elle comprend:
- au moins une douille (10) disposée à l'intérieur de ladite buse (2) et reliée aux parois intérieures (11) de ladite buse (2) par un ou plusieurs rayons (12);
- au moins une patte de centrage (14) dont une première extrémité (15) est reliée de manière stable avec ledit bouchon (3) et traverse de manière coulissante ladite douille (10);
- au moins un élément d'arrêt (20) couplé de manière stable à ladite patte de centrage (14) pour limiter le coulissement de cette dernière dans ladite douille (10).

7. Soupape de sécurité selon la revendication 7, **caractérisée en ce que** ledit élément élastique (22) comprend un ressort (23) dont une première extrémité (24) s'appuie contre le bord intérieur (25) de ladite sortie (5) et dont la deuxième extrémité (26) s'appuie contre ledit élément d'arrêt (20).

8. Soupape de sécurité selon la revendication 7 ou 8, **caractérisée en ce qu**'elle comprend un ensemble de réglage (30) de la position dudit élément d'arrêt (20) sur ladite patte de centrage (14).

9. Un transformateur électrique rempli d'huile comprenant un récipient ayant au moins une ouverture dans laquelle est insérée une soupape de sécurité (1), cette dernière étant munie de:
- au moins une buse (2) munie d'au moins une entrée (4) de fluides, en communication hydraulique avec l'intérieur dudit récipient, et au moins une sortie (5);
- au moins un bouchon (3) pour fermer ladite sortie (5) de ladite buse (2), ledit bouchon (3) comportant au moins une partie annulaire (7) agencée pour envelopper au moins une partie (8) des parois latérales (9) de ladite buse (2) à proximité de ladite sortie (5);
- au moins un élément élastique (22) agissant au moins sur ledit bouchon (3) pour contrer son soulèvement de ladite buse (2);
- des moyens d'étanchéité (35) pour étanchéifier ledit bouchon (3) avec ladite buse (2),
**caractérisé en ce que** lesdits moyens d'étanchéité (35) comprennent au moins un premier joint (36) et au moins un deuxième joint (37) espacés d'une distance prédéterminée et interposés entre ladite partie (8) desdites parois latérales (9) de ladite buse (2) et ladite partie annulaire (7) dudit bouchon (3) pour identifier une première zone d'étanchéité (40) proximale de ladite sortie (5) et une deuxième zone d'étanchéité (41) distale, le soulèvement dû à une surpression dudit bouchon (3) de ladite buse (2) définissant au moins trois configurations de fonctionnement :
- au moins une première configuration dans laquelle lesdites deux zones d'étanchéités (40, 41) fonctionnent, lesdits joints (36, 37) étant en contact à la fois avec ladite partie (8) desdites parois latérales (9) de ladite buse (2) et ladite partie annulaire (7) dudit bouchon (3) ;
- au moins une deuxième configuration dans laquelle seule ladite deuxième zone d'étanchéité (41) fonctionne, seul ledit deuxième joint (37) étant en contact à la fois avec ladite partie (8) desdites parois latérales (9) de ladite buse (2) et ladite partie annulaire (7) dudit bouchon (3);
- au moins une troisième configuration dans laquelle aucune desdites zones d'étanchéité (40, 41) ne fonctionne, ledit bouchon (3), lesdits joints (36, 37) et ladite buse (2) permettant la continuité hydraulique entre ladite sortie (5) de ladite buse (2) et l'extérieur,
le positionnement dudit premier joint (36) permettant de fixer l'instant de la transition, pendant le déplacement entre ladite buse (2) et ladite partie annulaire (7) dudit bouchon (3), de ladite soupape (1) de ladite première configuration à ladite deuxième configuration.
